# EUROPÄISCHE PATENTSCHRIFT

(11) **EP 2 316 680 B1**
(45) Veröffentlichungstag und Bekanntmachung des Hinweises auf die Patenterteilung: **02.03.2016**
(21) Anmeldenummer: 10014048.2
(22) Anmeldetag: 28.10.2010
(51) Int. Cl.: B60J 7/20

(54) **Cabrioletfahrzeug mit einem Verdeck mit Z-Faltungsprinzip**
Cabriolet vehicle with a top with Z-folding principle
Véhicule cabriolet doté d'une capote pliante en Z

(30) Priorität: 28.10.2009 DE 102009051122
(43) Veröffentlichungstag der Anmeldung: 04.05.2011
(73) Patentinhaber: Audi AG, 85045 Ingolstadt (DE)
(72) Erfinder: Weiland, Mario, 85049 Ingolstadt (DE)
(74) Vertreter: Engelhardt, Harald

(56) Entgegenhaltungen:
- EP-A1- 1 038 710
- DE-A1- 10 222 189
- DE-A1-102004 041 538
- DE-U1- 29 721 663

## Beschreibung

Die Erfindung betrifft ein Cabrioletfahrzeug mit einem Verdeck mit Z-Faltungsprinzip nach dem Oberbegriff des Anspruchs 1.

Bei einem Cabrioletfahrzeug mit einem Verdeck mit Z-Faltungsprinzip ist das Verdeck mittels eines Verdeckgestänges aus einer Geschlossenstellung mit einer Z-Faltung in eine Offenstellung in einen rückwärtigen Verdeckkasten einschwenkbar. Dabei bildet hier im gefalteten Zustand der obere Z-Flächenbereich mit einem Frontspriegel eine Kastenabdeckung ohne einen zusätzlichen Kastendeckel. Ohne zusätzliche Maßnahmen sind jedoch bei einem so geöffneten Verdeck die Gestängehauptlagerbereiche, (Gestängeteile, Verdeckbefestigungen Dichtungen, Seilzüge etc.) beidseitig vor der Kastenabdeckung sichtbar und stören die optische Erscheinung des Fahrzeugs. Für eine Abdeckung dieser Bereiche sind daher bereits sogenannte Gestängeaustrittsklappen allgemein bekannt, welche im Bereich der Gestängehauptlager rohbaufest angebunden sind und per Fremdantrieb oder manuell beim Erreichen der geöffneten Endposition des Verdecks zur Abdecklung geöffnet und geschlossen werden (z. B. Audi TT). Bei anderen Ausführungen von Gestängeaustrittsklappen werden diese bei geöffnetem Verdeck von Hand aufgesteckt und vor dem Schließen des Verdecks wieder entfernt (z. B. Audi A3 Cabrio). Bei den vorstehenden bekannten Lösungen kann sich nachteilig das geöffnete Verdeck erst in Richtung Geschlossenstellung in Bewegung setzen, wenn die Gestängeaustrittsklappen geöffnet beziehungsweise entfernt sind, da es sonst damit zu Gestängekollisionen kommt. Dies führt zu relativ langen Öffnungs- und Schließzeiten und bei aufsteckbaren Gestängeaustrittsklappen zu einer umständlichen Handhabung. Konzeptbedingt können zudem rohbaufest angebrachte Gestängeaustrittsklappen nur eine begrenzte Fläche des Hauptlagerbereichs abdecken, da durch den Anbringungsort die Klappengröße eingeschränkt ist.

DE 2004 041538 A1 zeigt ein Cabrioletfahrzeug mit einfahrbaren Gestängeaustrittsklappen.

Weiter ist ein Cabrioletfahrzeug mit einem Verdeck, jedoch mit K-Faltungsprinzip bekannt (DE 297 21 663 U1). Ein dreiteiliger Verdeckkastendeckel weist einen mittleren Kastendeckelteil und zwei seitliche Kastendeckelteilen auf, welche beweglich am Dachrahmen des Verdecks angelenkt sind und bei geöffnetem Verdeck die beiden Seitenbereiche direkt neben dem Verdeck abdecken. Die Bewegung erfolgt hier vorrangig gesteuert um eine Fahrzeuglängsachse (X-Achse) rotatorisch sowie translatorisch. Insgesamt ist hier ein K-Faltungsverdeck mit einer aufwendigen Verdeckkastenabdeckung durch einen dreiteiligen Verdeckkastendeckel dargestellt.

Zudem ist ein Cabrioletfahrzeug mit einem Verdeck bekannt mit einer zusammen mit dem Verdeckverschluss bewegbaren Abdeckkappe, die bei geschlossenem Verdeck eine Fortsetzung einer Frontspriegelblende für eine optisch ansprechende Innenraumoptik bildet. Eine Abdeckung eines Hauptlagerbereichs bei geöffnetem Verdeck ist damit nicht möglich.

Aufgabe der Erfindung ist es, ein gattungsgemäßes Cabrioletfahrzeug mit einem Verdeck mit Z-Faltungsprinzip so weiterzubilden, dass mit einer einfachen, kostengünstigen Konstruktion Gestängeaustrittsklappen mit geeigneter Abdeckfunktion in Verbindung mit einer schnellen und bequemen Verdeckbetätigung zur Verfügung gestellt werden.

Diese Aufgabe wird erfindungsgemäß dadurch gelöst, dass am Frontspriegel jeweils in einem Seitenbereich eine Gestängeaustrittsklappe schwenkbar angebracht ist und in der Geschlossenstellung des Verdecks in einen Aufnahmeraum am Frontspriegel in eine Verstauposition einschwenkbar und in der Offenstellung des Verdecks aus dem Aufnahmeraum heraus in eine Abdeckposition zur Abdeckung des Hauptlagerbereichs ausschwenkbar ist.

Da hier die Gestängeaustrittsklappen mit dem Frontspriegel bei der Verdeckbewegung mitbewegt werden, kann das Verdeck in der Offenstellung sofort zum Schließen in Bewegung gesetzt werden, ohne das die Gestängeaustrittsklappen vorher geöffnet werden müssen, da durch die Anbringung am Frontspriegel eine Gestängekollision nicht möglich ist. Zudem kann im Bereich des Frontspriegels ein relativ großer Aufnahmeraum für die jeweilige Gestängeaustrittsklappe zur Verfügung gestellt werden, so dass auch relativ große Klappendimensionen für eine ausreichende Abdeckfunktion der Hauptlagerbereiche möglich sind. Zudem wird vorteilhaft kein zusätzlicher Bauraum im Hauptlagerbereich beansprucht, wie dies bei einer aufbauseitigen Anbringung von Gestängeaustrittsklappen nach dem Stand der Technik erforderlich ist.

Vorzugsweise kann jeweils ein Aufnahmeraum beidseitig am Frontspriegel zwischen diesem und einer fahrzeuginnenseitigen Frontspriegelblende für eine Gestängeaustrittsklappe ausgebildet werden.

Eine Gestängeaustrittsklappe kann dabei einfach um eine etwa vertikale Schwenkachse am Frontspriegel schwenkbar ausgeführt sein. Die Lage der Schwenkachse und die Schwenkgeometrie ist den individuellen Gegebenheiten anzupassen. Wesentlich ist dabei, dass die Gestängeaustrittsklappen jeweils beidseitig am Frontspriegel in einen diesen vorgelagerten Seitenbereich ausschwenkbar sind.

Auch die Form der Gestängeaustrittsklappen kann den individuellen Gegebenheiten angepasst werden. Regelmäßig ist eine etwa rechteckige, plattenförmige Klappenform geeignet. Für die Klappen ist ein relativ stabiles, gegebenenfalls flexibles Material zu wählen, wobei sich insbesondere hier Kunststoffmaterial anbietet.

Eine geeignete Schwenkkinematik, bei der die Gestängeaustrittsklappe jeweils mit ihrer ganzen Fläche aus dem Aufnahmeraum für die Abdeckfunktion austreten kann, wird mit einem Klappenfortsatz, durch den die Schwenkachse geführt ist, erreicht.

In einer besonders bevorzugten Ausführungsform wird die Schwenkbewegung der Gestängeaustrittsklappen in Abhängigkeit der Verdeckstellung automatisiert mittels eines Elektromotors und einer verdeckstellungsabhängigen Steuerung durchgeführt. Alternativ zu einem separaten Fremdantrieb mit einem Elektromotor wird die Schwenkbewegung der Gestängeaustrittklappen jedoch bevorzugt durch einen mit der Verdeckbewegung gekoppelten Schwenkantrieb, insbesondere mit einer Kulissenführung und/oder Bowdenzugführung ausgeführt.

Anhand einer Zeichnung wird die Erfindung weiter erläutert.

Es zeigen:
- Fig. 1: eine perspektivische Teilansicht auf ein Cabrioletfahrzeug mit einem geöffneten Verdeck mit Z-Faltungsprinzip,
- Fig. 2: den Bereich nach Fig. 1 in einer Draufsicht von oben,
- Fig. 3: eine schematische Darstellung lediglich des Verdeckteils nach Fig. 2 mit teilweise ausgeschwenkter Gestängeaustrittsklappe,
- Fig. 4: eine Darstellung entsprechend Fig. 3 mit eingeschwenkter Gestängeaustrittsklappe, und
- Fig. 5: einen Schnitt entlang der Linie A-A aus Fig. 4.

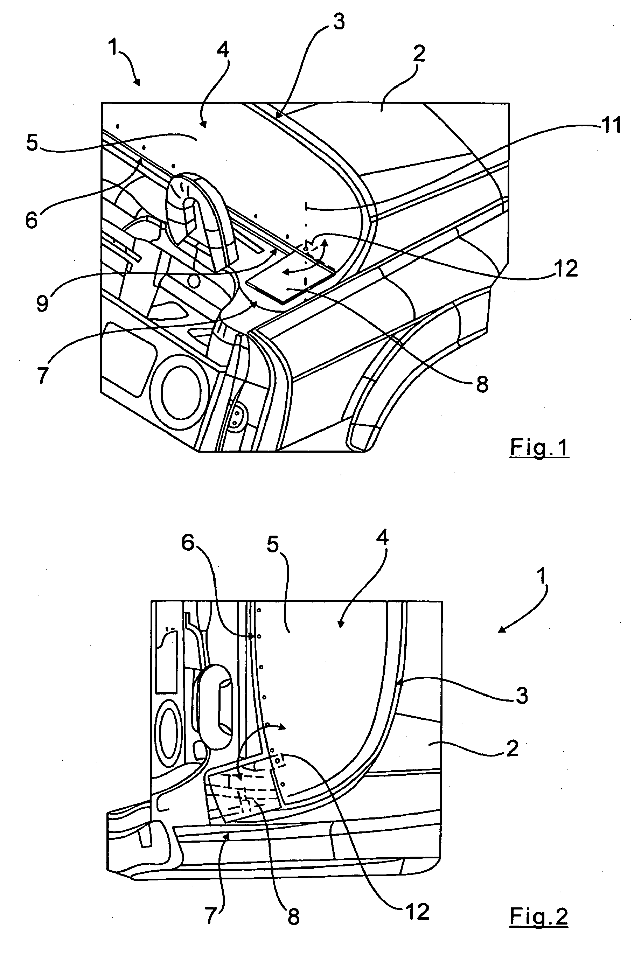

In der perspektivischen Darstellung nach Fig. 1 ist ein hinterer, linker Teil eines Cabrioletfahrzeugs 1 mit einem Karosserieaufbau 2 und einem Verdeckkasten 3 dargestellt. Ein Verdeck 4 liegt hier in seiner Offenstellung im Verdeckkasten 3 ein, wobei das Verdeck 4 mit einem oberen Z-Flächenbereich 5 und des Frontspriegels des im Z-Faltungsprinzip verstauten Verdecks eine Kastenabdeckung des Verdeckkastens 3 bildet.

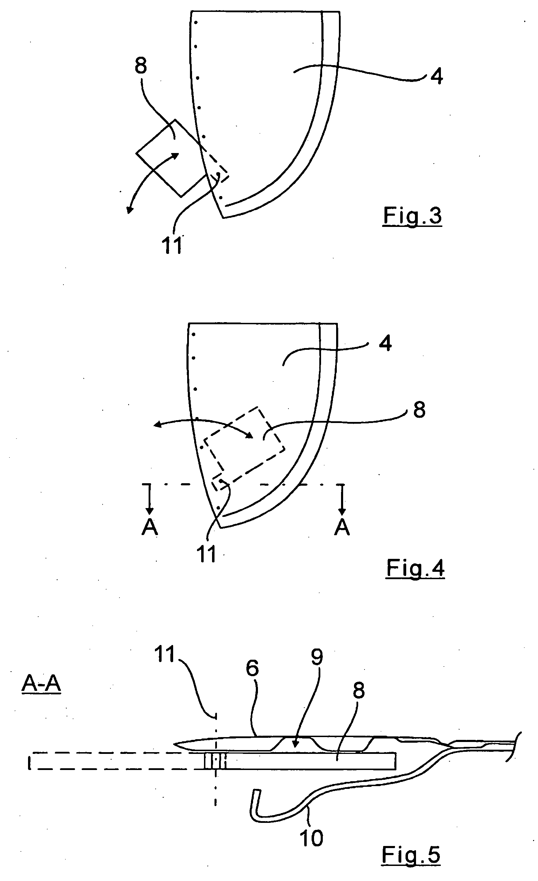

Systembedingt kann bei einer solchen Abdeckung wegen der quer etwa geradlinig durchlaufenden Verdeckvorderkante eine Abdeckung der beidseitig davorliegenden Hauptlagerbereiche 7 nicht durchgeführt werden. Für eine solche Abdeckung ist hier zu beiden Seiten jeweils eine Gestängeaustrittsklappe (8) vorgesehen, (die aus einem Aufnahmeraum (9) zwischen dem Frontspriegel 6 und einer darunterliegenden Frontspriegelblende 10) in eine Abdeckposition um eine vertikale Schwenkachse 11 ausschwenkbar und in eine Verstauposition wieder einschwenkbar ist (siehe Fig. 3 bis 5).

Ein Schwenkantrieb ist nicht im Detail dargestellt und kann mit einem gesteuerten Elektromotor oder bevorzugt durch eine Kopplung an die Verdeckkinematik realisiert werden.

Für eine geeignete Ausschwenkung der Gestängeaustrittsklappe 8 vor den Seitenbereich des Frontspriegels 6 weist diese an ihrer rechteckigen, plattenförmigen Gestalt einen lappenförmigen Klappenfortsatz 12 auf, durch den die vertikale Schwenkachse 11 geführt ist.

In den Fig. 1 und 2 ist die Gestängeaustrittsklappe 8 in ihrer ausgeschwenkten Abdeckposition dargestellt, in Fig. 3 in einer teilweise aus- beziehungsweise eingeschwenkten Position entsprechend einer Verdeckzwischenstellung und in Fig. 4 und Fig. 5 in einer eingeschwenkten Verstauposition. In Fig. 5 ist zudem strichliert die ausgeschwenkte Abdeckposition der Gestängeaustrittsklappe 8 gezeigt.

## Patentansprüche

1. Cabrioletfahrzeug (1) mit einem Verdeck (4) mit Z-Faltungsprinzip, wobei das Verdeck (4) einen Frontspriegel (6) aufweist und das Verdeck (4) mittels eines Verdeckgestänges aus einer Geschlossenstellung mit einer Z-Faltung in eine Offenstellung in einen rückwärtigen Verdeckkasten (3) einschwenkbar ist und dabei der obere Z-Flächenbereich(5) mit dem Frontspriegel eine Kastenabdeckung (6) bildet, und
mit beidseitigen Gestängeaustrittsklappen (8), mit denen bei geöffnetem Verdeck (4) die jeweils seitlich vor der Kastenabdeckung liegenden Hauptlagerbereiche (7) der beidseitigen Verdeckgestänge von oben her abdeckbar sind,
**dadurch gekennzeichnet,**
**dass** am Frontspriegel jeweils in einem Seitenbereich eine Gestängeaustrittsklappe (8) schwenkbar angebracht ist, die in der Geschlossenstellung des Verdecks (4) in einen Aufnahmeraum (9) am Frontspriegel (6) in eine Verstauposition eingeschwenkt und in der Offenstellung des Verdecks (4) aus dem Aufnahmeraum (9) in eine Abdeckposition zur Abdeckung des Hauptlagerbereichs (7) ausschwenkbar ist.

2. Cabrioletfahrzeug (1) nach Anspruch 1, **dadurch gekennzeichnet, dass** der Aufnahmeraum (9) zwischen dem Frontspriegel (6) und einer fahrzeuginnenseitigen Frontspriegelblende (10) gebildet ist.

3. Cabrioletfahrzeug (1) nach Anspruch 1 oder Anspruch 2, **dadurch gekennzeichnet, dass** die Gestängeaustrittsklappe (8) um eine etwa vertikale Schwenkachse (11) schwenkbar ist.

4. Cabrioletfahrzeug (1) nach einem der Ansprüche 1 bis 3, **dadurch gekennzeichnet, dass** die Gestängeaustrittsklappe (8) etwa rechteckig plattenförmig ausgeführt ist und aus einem relativ stabilen, gegebenenfalls flexiblen Material, insbesondere Kunststoffmaterial besteht.

5. Cabrioletfahrzeug (1) nach Anspruch 4, **dadurch gekennzeichnet, dass** die Gestängeaustrittsklappe (8) einen Klappenfortsatz (12) aufweist, durch den die Schwenkachse (11) geführt ist.

6. Cabrioletfahrzeug (1) nach einem der Ansprüche 1 bis 5, **dadurch gekennzeichnet, dass** ein Schwenkantrieb als Elektromotor vorgesehen ist mit einer Steuerung entsprechend der Verdeckstellung.

7. Cabrioletfahrzeug (1) nach einem der Ansprüche 1 bis 5, **dadurch gekennzeichnet, dass** ein mit der Verdeckbewegung gekoppelter Schwenkantrieb, insbesondere mit einer Kulissenführung und/oder Bowdenzugführung vorgesehen ist.

## Claims

1. Cabriolet vehicle (1) with a cover (4) with a Z-folding principle, wherein the cover (4) comprises a front roof arch (6) and the cover (4) can be pivoted by means of a cover rod from a closed position with a Z-fold into an open position into a rear cover box (3) and thereby the upper Z-surface area (5) forms a box cover (6) with the front roof arch, and with rod outlet flaps (8) on both sides, by means of which with an opened cover (4) the main bearing areas (7) of the cover rod on both sides arranged laterally in front of the box cover can be covered from above, **characterised in that** on the front roof arch a rod outlet flap (8) can be attached pivotably in a side area, which in the closed position of the cover (4) is pivoted into a storage compartment (9) on the front roof arch (6) into a storage position and in the open position of the cover (4) can be pivoted out of the storage compartment (9) into a cover position for covering the main bearing area (7).

2. Cabriolet vehicle (1) according to claim 1, **characterised in that** the storage compartment (9) is formed between the front roof arch (6) and an inner vehicle front roof arch panel (10).

3. Cabriolet vehicle (1) according to either claim 1 or claim 2, **characterised in that** the rod outlet flap (8) can be pivoted about an approximately vertical pivot axis (11).

4. Cabriolet vehicle (1) according to any one of claims 1 to 3, **characterised in that** the rod outlet flap (8) is designed to be approximately in the form of a rectangular plate and is made from a relatively stable, if necessary flexible material, in particular a plastic material.

5. Cabriolet vehicle (1) according to claim 4, **characterised in that** the rod outlet flap (8) comprises a flap extension (12), through which the pivot axis (11) is directed.

6. Cabriolet vehicle (1) according to any one of claims 1 to 5, **characterised in that** a pivot drive is provided as an electric motor with a control according to the cover position.

7. Cabriolet vehicle (1) according to any one of claims 1 to 5, **characterised in that** a pivot drive coupled to the cover movement is provided in particular with a sliding guide system and/or Bowden cable guide.

## Revendications

1. Véhicule cabriolet (1) comprenant une capote (4) pliante en Z, dans lequel la capote (4) présente un arceau frontal (6) et la capote (4) peut être escamotée par pivotement à l'aide d'une tringlerie de capote d'une position fermée à une position ouverte par pliage en Z dans un compartiment de rangement arrière (3) et la zone de surface supérieure repliée en Z (5) forme en l'occurrence avec l'arceau frontal un recouvrement de compartiment (6), et des volets de sortie de tringlerie (8) des deux côtés, avec lesquels, lorsque la capote (4) est ouverte, les zones de palier principal (7) - qui se trouvent, respectivement latéralement devant le recouvrement de compartiment - de la tringlerie de capote des deux côtés peuvent être recouvertes par le dessus,
**caractérisé en ce que** :
sur l'arceau frontal est monté à pivotement respectivement dans une zone latérale un volet de sortie de tringlerie (8) qui est escamoté, en position fermée de la capote (4), dans un espace récepteur (9) sur l'arceau frontal (6) en position de rangement et peut, en position d'ouverture de la capote (4), se dégager par pivotement hors de l'espace récepteur (9) en position de recouvrement pour recouvrir la zone de palier principal (7).

2. Véhicule cabriolet (1) selon la revendication 1, **caractérisé en ce que** l'espace récepteur (9) est formé entre l'arceau frontal (6) et un écran d'arceau frontal (10) côté intérieur du véhicule.

3. Véhicule cabriolet (1) selon la revendication 1 ou la revendication 2, **caractérisé en ce que** le volet de sortie de tringlerie (8) peut pivoter autour d'un axe pivot plus ou moins vertical (11).

4. Véhicule cabriolet (1) selon l'une quelconque des revendications 1 à 3, **caractérisé en ce que** le volet de sortie de tringlerie (8) est conçu en forme de plaque approximativement rectangulaire et est constitué d'un matériau relativement stable, éventuellement souple, en particulier d'une matière plastique.

5. Véhicule cabriolet (1) selon la revendication 4, **caractérisé en ce que** le volet de sortie de tringlerie (8) présente un prolongement de volet (12) par lequel l'axe pivot (11) est guidé.

6. Véhicule cabriolet (1) selon l'une quelconque des revendications 1 à 5, **caractérisé en ce qu'**une commande de pivotement est prévue sous la forme d'un moteur électrique avec une commande correspondant à la position de la capote.

7. Véhicule cabriolet (1) selon l'une quelconque des revendications 1 à 5, **caractérisé en ce qu'**il est prévu une commande de pivotement couplée au mouvement de la capote, en particulier avec un guidage par coulissement et/ou un guidage par câble Bowden.
